# EUROPÄISCHE PATENTSCHRIFT

(11) **EP 0 623 451 B1**
(45) Veröffentlichungstag und Bekanntmachung des Hinweises auf die Patenterteilung: **02.06.1999**
(21) Anmeldenummer: 94105921.4
(22) Anmeldetag: 16.04.1994
(51) Int. Cl.: B29C 53/66, B29C 53/80, B29D 30/30

(54) **Verfahren zum Auflegen eines gummierten Textilgewebestreifens auf einer Reifenaufbautrommel und Vorrichtung für die Durchführung des Verfahrens**
Method for laying a rubberized textile fabric band on a tire building drum and apparatus for carrying out this method
Procédé pour appliquer des bandes textiles caoutchoutées sur un tambour de confection de pneus et dispositif pour la mise en oeuvre de ce procédé

(30) Priorität: 29.04.1993 DE 4314114
(43) Veröffentlichungstag der Anmeldung: 09.11.1994
(73) Patentinhaber: Krupp Kunststofftechnik GmbH, 45143 Essen (DE)
(72) Erfinder: Dreyer, Hans, Dipl.-Ing., D-21077 Hamburg (DE); Klinger, Dieter, Dipl.-Ing., D-21217 Seevetal (DE); Wedekind, Werner, Dipl.-Ing., D-21376 Salzhausen (DE)

(56) Entgegenhaltungen:
- EP-A- 0 264 720
- EP-A- 0 288 609
- EP-A- 0 344 928
- EP-A- 0 430 519
- DE-A- 3 232 162
- FR-A- 1 535 966
- US-A- 3 941 644

## Beschreibung

Vorrichtung zum Zuführen und automatischen Auflegen eines endlosen gummierten Textilgewebestreifens auf eine Reifenaufbautrommel

Die Erfindung betrifft eine Vorrichtung zum Zuführen und automatischen Auflegen eines endlosen gummierten Textilgewebestreifens auf eine Reifenaufbautrommel, mit einer Verstelleinrichtung, die einen von einem Servomotor angetriebenen Schlitten aufweist, der parallel zur Achse der Welle der Reifenaufbautrommel bewegbar ist, wobei die Reifenaufbautrommel mit einem Drehgeber in Verbindung steht, der die Daten über die Drehbewegung der Welle der Reifenaufbautrommel an einen Rechner liefert, der die erforderliche Drehzahl des den Schlitten antreibenden Servomotors ermittelt, damit die axiale Verschiebung des Schlittens in einer festgelegten Abhängigkeit von der Winkelgeschwindigkeit der Reifenaufbautrommel verläuft.

Eine solche Vorrichtung ist aus der EP 0 264 720 A1 bekannt.

Der Erfindung liegt die Aufgabe zugrunde, eine verbesserte Textilgewebestreifenzuführung zu schaffen.

Diese Aufgabe wird durch die Vorrichtung mit der Merkmalskombination nach Anspruch 1 gelöst.

Ein besonderer Vorteil besteht darin, daß die Materialverteilung über die Breite des herzustellenden Reifens frei gewählt werden kann. Es können beispielsweise in den Randzonen mehrere Lagen überlappend und in der Mitte die Lagen genau nebeneinander angeordnet werden.

Vorteilhafte Weiterbildungen der erfindungsgemäßen Vorrichtung sind in den Unteransprüchen wiedergegeben.

Die erfindungsgemäße Vorrichtung wird anhand der Zeichnungen näher erläutert. Es zeigen
- Fig. 1: eine Vorrichtung zum automatischen Auflegen eines endlosen Textilgewebestreifens auf eine Reifenaufbautrommel in schematischer Darstellung;
- Fig. 2: die Auswickelvorrichtung der in Fig. 1 gezeigten Vorrichtung in schematische Darstellung;
- Fig. 3: die Führungsbahn und die Auflegevorrichtung der in Fig. 1 gezeigten Vorrichtung, die sich an die in Fig. 2 dargestellte Auswickelvorrichtung links anschließen, ebenfalls in schematischer Darstellung;
- Fig. 4: eine Einzelheit der in Fig. 3 dargestellten Auflegevorrichtung in größerem Maßstab;
- Fig. 5: die Einzelheit gemäß Fig. 4 in einer anderen Arbeitsstellung.

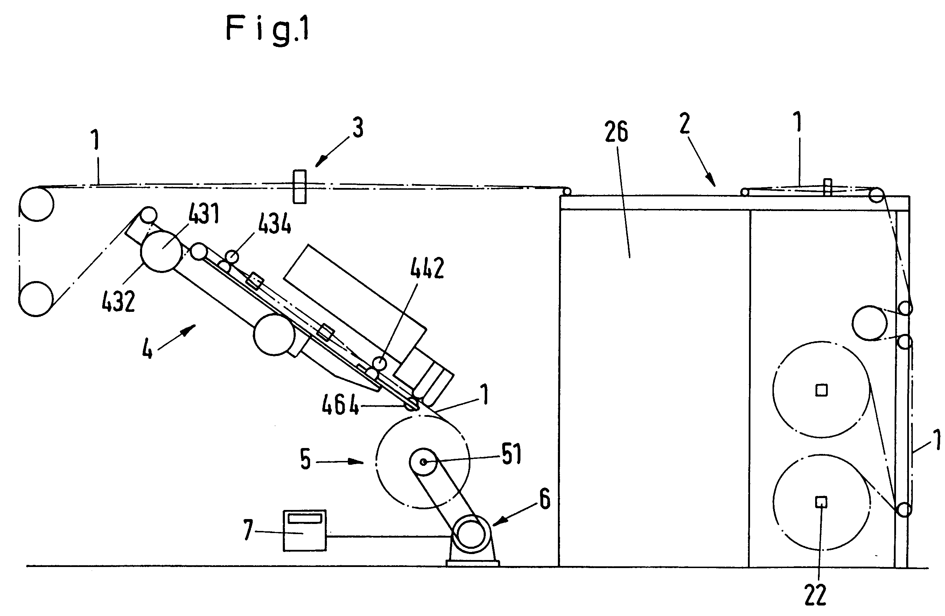

Wie Fig. 1 zeigt, ist ein durch einen gewickelten gummierten Textilgewebestreifen 1, der durch strichpunktierte Linien angedeutet ist, gebildeter Ballen auf den Auswickeldorn 22 einer Auswickelvorrichtung 2 aufgeschoben und ist der Textilgewebestreifen 1 in einen Materialspeicher 26 eingeführt. Der Textilgewebestreifen 1 ist dann über eine Führungsbahn 3 bis zur Antriebstrommel 432 einer Auflegevorrichtung 4 geführt, der den Textilgewebestreifen 1 der Reifenaufbautrommel 5 zuführt. Zwischen der Antriebstrommel 432 und der Reifenaufbautrommel 5 sind Rollenführungssysteme 434, 442 und 464 vorgesehen. Es ist ferner ein Drehgeber 6 vorgesehen, der mit einem Rechner 7 in Verbindung steht.

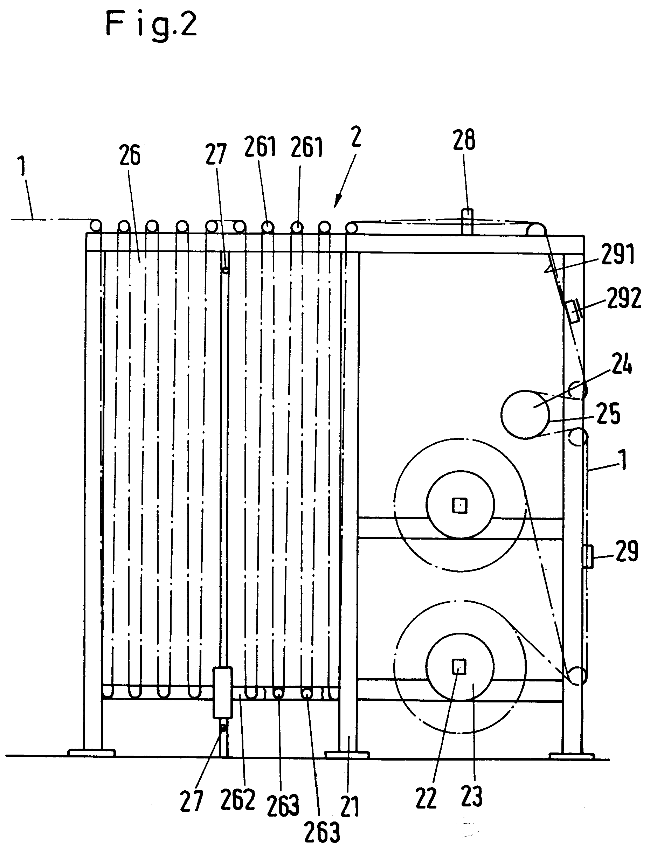

Die in Fig. 2 dargestellte Auswickelvorrichtung 2 besteht aus einem Profilrahmengestell 21, in dem ein Auswickeldorn 22 mit Scheibenbremse 23 sowie ein Auswickelmotor 24 mit Auswickeltrommel 25 und ein Materialspeicher 26 angeordnet sind. Der Materialspeicher 26 enthält im oberen Teil des Profilrahmengestells 21 fest montierte Rollen 261 und einen sich senkrecht dazu bewegenden Schlitten 262. In dem Schlitten 262 sind Gegenrollen 263 montiert.

Am oberen und am unteren Endpunkt des Fahrweges des Schlittens 262 sind Nährungsschalter 27 angebracht, die den Auswickelmotor 24 steuern. Senkrecht zu den fest montierten Rollen 261 sind Führungsrollen 28 angeordnet. Zwischen dem Auswickeldorn 22 und der Auswickeltrommel 25 ist eine Materialenderkennung 29 vorgesehen, während zwischen der Auswickeltrommel 25 und der ersten Rolle 261 des Materialspeichers 26 eine Klemmung 292 und ein Spliceblech 291 zum Ansetzen eines neuen Textilgewebestreifens 1 vorgesehen sind.

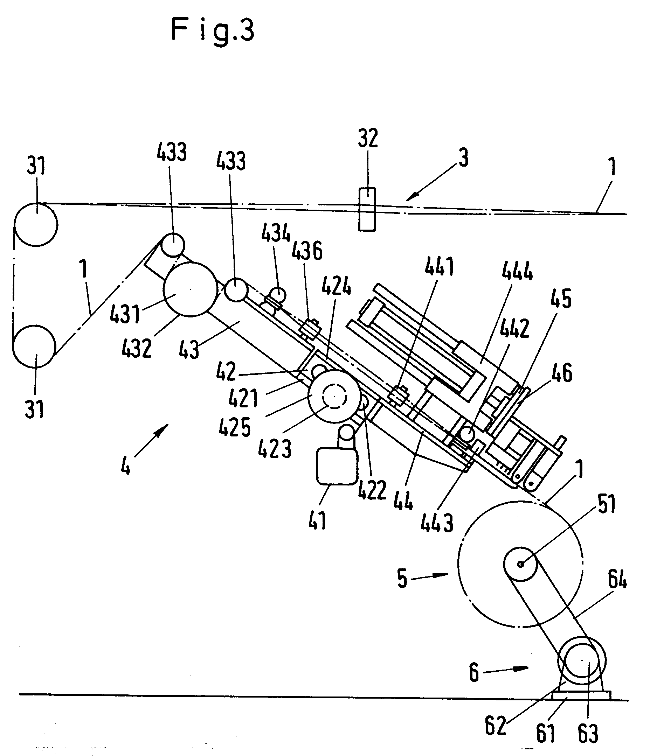

Fig. 3 zeigt eine Führungsbahn 3, die zwischen der Auswickelvorrichtung 2 (vgl. Fig. 2) und der Auflegevorrichtung 4 angeordnet ist. Die Führungsbahn 3 besteht aus Transportrollen 31 und senkrecht dazu angeordneten Führungsrollen 32.

Fig. 3 zeigt ferner die Auflegevorrichtung 4, deren Gestell durch eine aus einem Hohlprofilträger 41 be stehende Schweißkonstruktion gebildet ist, die parallel zur Achse der Welle 51 der Reifenaufbautrommel 5 am Sockel der Reifenaufbaumaschine montiert ist. Auf dem Hohlprofilträger 41 ist eine Verstelleinheit 42 angeordnet.

Die Verstelleinheit 42 besteht aus einer Grundplatte 421, zwei Führungen 422, einer Kugelgewindespindel 423 und einem parallel zur Achse der Welle 51 der Reifenaufbautrommel 5 verschiebbaren Schlitten 424. Zum Antrieb der Kugelgewindespindel 423 dient ein Servomotor 425. An der Grundplatte 421 der Verstelleinheit 42 ist ein Aluminiumprofil 43 befestigt, an das ein Servomotor 431 mit der Antriebstrommel 432 sowie vor und hinter der Antriebstrommel 432 befindliche Rollen 433, ein erstes Rollenführungssystem 434 - bestehend aus vier den Textilgewebestreifens 1 ganz umschließende Rollen - und zwei senkrecht angeordnete Rollen 436 angebaut sind.

An dem Schlitten 424 der Verstelleinheit 42 ist eine Aluminiumgrundplatte 44 angebracht, die als Träger für zwei senkrechtstehende Rollen 441, ein Rollenführungssystem 442, eine Rücklaufsperre 443 und eine Führungseinheit 444 mit einem doppeltwirkenden Druckluftzylinder dient. Am Anschlußflansch 45 der Führungseinheit 444 ist eine Trägerplatte 46 angebaut.

Außerdem zeigt Fig. 3 den Aufbau des Drehgebers 6. Der Drehgeber 6 besteht aus einem auf der Motorwippe 61 des Antriebsmotors der Reifenaufbautrommel 5 angeordneten Lagerbock 62 mit einem Impulsgeber 63, dessen Antriebswelle über einen Zahnriemen 64 spielfrei mit der Welle 51 der Reifenaufbautrommel 5 verbunden ist.

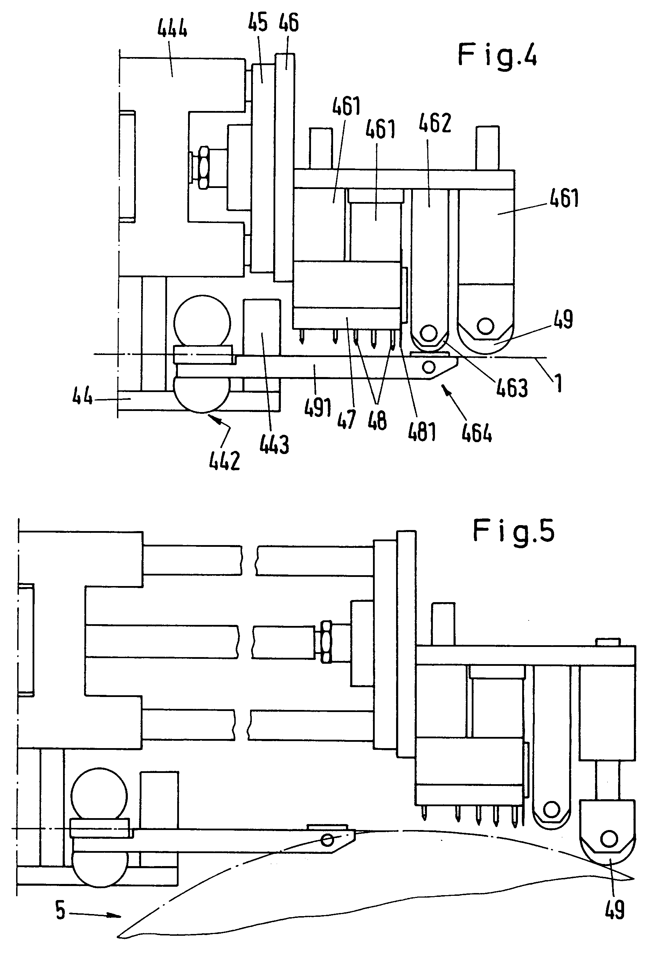

Aus den Fig. 4 und 5 ist zu ersehen, daß an der an den Anschlußflansch 45 der Führungseinheit 444 angebauten Trägerplatte 46 drei doppeltwirkende Druckluftzylinder 461 mit Verdrehsicherung und ein Träger 462 für die Deckrolle 463 eines weiteren Rollenführungssystems 464 montiert sind. An die Anschlußplatte des ersten Druckzylinders 461 ist eine Andrückplatte 47 befestigt, während an die Anschlußplatte des zweiten Druckzylinders 461 ein Nadelkissen 48 mit fest montierter Schneidklinge 481 und an die Anschlußplatte des dritten Druckzylinders 461 eine schaumbeschichtete Druckrolle 49 befestigt sind. Hierbei sind das Nadelkissen 48 und die Andrückplatte 47 in der Weise mechanisch miteinander gekuppelt, daß dann, wenn das Nadelkissen 48 heruntergeht, die Andrückplatte 47 mitgenommen wird, und dann, wenn die Andrückplatte 47 nach oben geht, das Nadelkissen 48 mit der Schneidklinge 481 mitgenommen wird. Das Gegenstück 491 der Nadeln des Nadelkissens 48 und der Schneidklinge 481 sowie drei Rollen, einschließlich der Deckrolle des Rollenführungssystems 442, sind fest in die Aluminiumgrundplatte 44 integriert.

Das Auflegen eines gummierten Textilgewebestreifens 1 auf die Reifenaufbautrommel 5 ist nachstehend im einzelnen wiedergegeben.

Zunächst wird ein durch den gewickelten gummierten Textilgewebestreifen 1 gebildeter Ballen auf den Auswickeldorn 22 der Auswickelvorrichtung 2 aufgeschoben. Sodann wird der Textilgewebestreifen 1 über die Auswickeltrommel 25 gelegt und über das Spliceblech 291 durch die Klemmung 292 hindurch in den Materialspeicher 26 eingefädelt. Der Textilgewebestreifen 1 wird dann über die Führungsbahn 3 zur Antriebstrommel 432 der Auflegevorrichtung 4 weitergeführt. Ein Drehgeber 6 liefert die Daten über die Drehbewegung der Welle 51 der Reifenaufbautrommel 5, beispielsweise die Winkelgeschwindigkeit der Reifenaufbautrommel 5, die der Fördergeschwindigkeit des Textilgewebestreifen 1 entspricht, an einen Rechner 7. Der Rechner 7 ermittelt daraus kontinuierlich die erforderlichen Drehzahlen der Servomotoren 425 und 431, so daß einerseits die axiale Verschiebung des Schlittens 424 in einer festgelegten Abhängigkeit von der Winkelgeschwindigkeit der Reifenaufbautrommel 5 verläuft, während andererseits ein Synchronlauf zwischen Antriebstrommel 432 und Reifenaufbautrommel 5 gewährleistet ist. Der Schlitten 424 und die Antriebstrommel 432 folgen also nicht einem starr vorgegebenen Wert, beispielsweise der Drehzahl, sondern reagieren kontinuierlich auf jede auftretende Drehzahländerung der Reifenaufbautrommel 5.

Hinter der Antriebstrommel 432 wird der Textilgewebestreifen 1 durch das erste Rollenführungssystem 434 geführt, wodurch der Textilgewebestreifen 1 in jeder Richtung fest fixiert wird. Anschließend wird der Textilgewebestreifen 1 um 90° verdreht und durchläuft die beiden zur Förderrichtung senkrecht stehenden Rollen 436. Durch das Verdrehen des Textilgewebestreifen 1 um 90° wird erreicht, daß der Textilgewebestreifens 1 beim Übergang auf den seitlich zur Förderrichtung des Textilgewebestreifen 1 verfahrenden Schlittens 424 der Verstelleinheit 42 nicht knickt oder beschädigt wird.

Der Textilgewebestreifen 1 durchläuft nun auf dem Schlitten 424 der Verstelleinheit 42 die beiden weiteren zur Förderrichtung senkrecht stehenden Rollen 441. Der Schlitten 424 der Verstelleinheit 42 steht in der über den Rechner 7 frei wählbaren Ansetzposition. Der Textilgewebestreifen 1 wird um 90° zurückgedreht und durchläuft das zweite Rollenführungssystem 442, das den Textilgewebestreifen 1 wieder fest fixiert. Der Textilgewebestreifen 1 wird dann unter der Rücklaufsperre 443 hindurch gezogen und gelangt unter das Nadelkissen 48 (vgl. Fig. 4). Dort wird der Textilgewebestreifen 1 durch das Absenken des Nadelkissens 48 durchstoßen und hängt nach dem Abheben des Nadelkissens 48 an dessen Nadeln. Nun werden das Nadelkissen 48, die Andrückplatte 47 sowie die obere Rolle des Rollenführungssystems 464 und die Druckrolle 49 durch die Führungseinheit 444 in Richtung der Reifenaufbautrommel 5 verschoben. Dadurch wird der Textilgewebestreifen 1 vorwärts gefördert und in die drei Rollen des nach oben offenen Rollenführungssystems 464 gelegt. Die Andrückplatte 47 wird abgesenkt. Dadurch wird der Textilgewebestreifen 1 an das auf der Reifenaufbautrommel 5 liegende Material gedrückt. Da das - drucklos geschaltete - Nadelkissen 48 mit heruntergeht, wird der Textilgewebestreifen 1 seitlich geführt. Die Druckrolle 49 wird ebenfalls abgesenkt und drückt gegen die Reifenaufbautrommel 5. Die Andrückplatte 47 geht wieder zurück in die Ausgangsstellung und die Führungseinheit 444 fährt in die Grundstellung zurück. Dadurch rollt die Druckrolle 49 über den sich auf der Reifenaufbautrommel 5 befindlichen Textilgewebestreifen 1 und drückt diesen zusätzlich an (vgl. Fig. 5). Die Reifenaufbautrommel 5 hat nun die vorgegebene Umdrehungszahl. Nach einer Umdrehung geht die Druckrolle 49 in die Ausgangsposition zurück. Der Servomotor 425 der Verstelleinheit 42 folgt der Drehbewegung der Reifenaufbautrommel 5 nach dem frei vorgewählten Reifenmenü.

Nachstehend ist ein Reifenmenü, dessen Daten über einen PC in den Rechner 7 eingegeben werden, beispielsweise wiedergegeben:
- A. Gleichlauf: (Servomotor 431 Antriebstrommel 432)
- 1. Drehzahl: Eingabe Durchmesser Reifenaufbautrommel 5.
- B. Spulung: (Servomotor 425 Verstelleinheit 42)
- 1. Ansetzposition: frei wählbar über den gesamten Verfahrweg der Verstelleinheit 42.
- 2. Richtung:
- frei wählbar: - von links nach rechts
- von links nach rechts und/oder wechselnd während des Spulens.
- Anmerkung:: Bei einer Richtungsänderung dreht die Reifenaufbautrommel kontinuierlich weiter.
- 3. Vorschub: frei wählbar von Null bis maximal Verfahrweg der Verstelleinheit 42.
- 4. Mittenposition: frei wählbar. des Gesamtpaketes
- C. Eichen: Der Schlitten 424 der Verstelleinheit 42 wird nach der Dateneingabe einmal in die Eichposition verfahren. Damit ist automatisch jede Position des Schlittens 424 bestimmt.

Mit diesem System ist man vollkommen unabhängig von der Drebewegung der Welle 51 der Reifenaufbautrommel 5.

Gleichlaufschwankungen und die Drehzahl der Reifenaufbautrommel 5 haben keinen Einfluß auf die Spulgenauigkeit des Textilgewebestreifens (1), weil die Servomotoren 431 und 425 ihre Daten vom Rechner 7 bekommen, der jede Veränderung, die der Drehgeber 6 meldet, umsetzt.

## Patentansprüche

1. Vorrichtung zum Zuführen und automatischen Auflegen eines endlosen gummierten Textilgewebestreifens (1) auf eine Reifenaufbautrommel (5), mit einer Verstelleinrichtung (42), die einen von einem Servomotor (425) angetriebenen Schlitten (424) aufweist, der parallel zur Achse der Welle (51) der Reifenaufbautrommel (5) bewegbar ist, wobei die Reifenaufbautrommel (5) mit einem Drehgeber (6) in Verbindung steht, der die Daten über die Drehbewegung der Welle (51) der Reifenaufbautrommel (5) an einen Rechner (7) liefert, der die erforderliche Drehzahl des den Schlitten (424) antreibenden Servomotors (425) ermittelt, damit die axiale Verschiebung des Schlittens in einer festgelegten Abhängigkeit von der Winkelgeschwindigkeit der Reifenaufbautrommel (5) verläuft, **dadurch gekennzeichnet**, daß an dem Schlitten (424) ein Träger (44) für eine Führungseinheit (444) mit einem doppeltwirkenden Druckluftzylinder dient, wobei an einem Anschlußflansch (45) der Führungseinheit eine Trägerplatte (46) angebaut ist, an die ein Träger (462) für die Deckrolle (463) eines Rollenführungssystemes (464) und drei doppeltwirkende Druckluftzylinder (461) mit Verdrehsicherung montiert sind, wobei an der Anschlußplatte des ersten Druckzylinders (461) eine Andrückplatte (47) befestigt ist, während an der Anschlußplatte des zweiten Druckzylinders (461) ein Nadelkissen (48) mit fest montierter Schneidklinge (481) und an der Anschlußplatte des dritten Druckzylinders (461) eine schaumbeschichtete Druckrolle (49) befestigt sind.

2. Vorrichtung nach Anspruch 1, dadurch gekennzeichnet, daß mindestens drei Rollenführungssysteme (434, 442, 464) vorgesehen sind.

3. Vorrichtung nach Anspruch 1 oder 2, dadurch gekennzeichnet, daß der Träger für die Führungseinheit eine Aluminiumplatte (44) ist.

4. Vorrichtung nach einem der Ansprüche 1 bis 3, dadurch gekennzeichnet, daß das Nadelkissen (48) und die Andrückplatte (47) in der Weise miteinander mechanisch gekuppelt sind, daß dann, wenn das Nadelkissen (48) heruntergeht, die Andrückplatte (47) mitgenommen wird, und dann, wenn die Andrückplatte (47) nach oben geht, das Nadelkissen mit der Schneidklinge (481) mitgenommen wird, und daß das Gegenstück der Nadeln des Nadelkissens (48) und der Schneidklinge (481) fest in die Aluminiumplatte (44) integriert sind.

5. Vorrichtung nach einem der Ansprüche 2 bis 4, dadurch gekennzeichnet, daß zwischen dem hinter der Antriebstrommel (432) angeordneten ersten Rollenführungssystem (434) und dem zweiten Rollenführungssystem (442) zwei weitere Rollenführungssysteme (436, 441) mit senkrecht zur Förderrichtung stehenden Rollen angeordnet sind, wodurch der durchlaufende Textilgewebestreifen (1) seitlich zum Schlitten (424) in einer relativ zur übrigen Lage 90° gedrehten Stellung führbar ist.

## Claims

1. Device for feeding and automatically laying a continuous rubberised textile fabric band (1) on a tyre construction drum (5), with an adjusting means (42) having a cradle (424), which is driven by a servomotor (425) and is movable parallel to the axis of the shaft (51) of the tyre construction drum (5), whereby the tyre construction drum (5) connects to a shaft encoder (6), which passes data relating to the rotational movement of the shaft (51) of the tyre construction drum (5) to a computer (7), which determines the required speed of the servomotor (425) driving the cradle (424) so that the axial displacement of the cradle proceeds in fixed dependence upon the angular velocity of the tyre construction drum (5), characterised in that on the cradle (424) a support (44) is provided for a guide unit (444) with a double-action compressed air cylinder, whereby a support plate (46) is attached to a connection flange (45) of the guide unit, onto said support plate a support (462) for the cover roller (463) of a roller guidance system (464) and three double-action compressed air cylinders (461) are mounted with relative rotation locking means, whereby a contact pressure plate (47) is fastened to the connection plate of the first compressed air cylinder (461), while on the connection plate of the second compressed air cylinder (461) a needle cushion (48) with fixedly mounted cutting blade (481) is fastened and on the connection plate of the third compressed air cylinder (461) a foam-coated pressure roller (49) is fastened.

2. Device according to Claim 1, characterised in that at least three roller guidance systems (434, 442, 464) are provided.

3. Device according to Claim 1 or 2, characterised in that the support for the guide unit is an aluminium plate (44).

4. Device according to one of Claims 1 to 3, characterised in that the needle cushion (48) and the contact pressure plate (47) are coupled to one another mechanically in such a way that when the needle cushion (48) moves downwards, the contact pressure plate (47) is taken along with it, and when the contact pressure plate (47) is moved upwards, the needle cushion (48) with the cutting blade (481) is taken along with it, and that the counter-piece of the needles of the needle cushion (48) and the cutting blade (481) are firmly integrated into the aluminium plate (44).

5. Device according to one of Claims 2 to 4, characterised in that between the first roller guidance system (434) arranged behind the drive pulley (432) and the second roller guidance system (442), two further roller guidance systems (436, 441) with perpendicular rollers are arranged, as a result of which the textile fabric band (1) passing through may be guided laterally to the cradle (424) in a position rotated 90° relative to the remaining position.

## Revendications

1. Dispositif pour amener et appliquer automatiquement une bande textile caoutchoutée sans fin (1) sur un tambour de confection de pneumatiques (5), comportant un dispositif de réglage (42) présentant un chariot (424), entraîné par un servomoteur (425) et pouvant se déplacer parallèlement à l'axe de l'arbre (51) du tambour de confection de pneumatiques (5), le tambour de confection de pneumatiques (5) étant relié à un détecteur de rotation (6), qui fournit les données sur le mouvement de rotation de l'arbre (51) du tambour de confection de pneumatiques (5) à un calculateur (7), qui détermine la vitesse de rotation nécessaire du servomoteur (425) entraînant le chariot (424) pour que le déplacement axial du chariot s'effectue en fonction bien déterminée de la vitesse angulaire du tambour de confection de pneumatiques (5),
caractérisé en ce que,
sur le chariot (424), un support (44) sert à une unité de guidage (444) comportant un vérin pneumatique à double effet, une plaque support (46) étant montée sur une bride de raccordement (45) de l'unité de guidage, plaque support (46) sur laquelle sont montés un support (462) pour le rouleau de couvercle (463) d'un système de guidage à rouleau (464) et trois vérins pneumatiques à double effet (461) avec sécurité anti-rotation, une plaque de pression (47) étant fixée à la bride de raccordement (45) du premier vérin de pression (461), tandis qu'un coussin à aiguilles (48), avec lame de coupe (481) montée fixe, est fixé sur la plaque de raccordement du deuxième vérin de pression (461) et qu'un rouleau de pression (49) revêtu d'une couche de mousse est fixé sur la plaque de raccordement du troisième vérin de pression (461).

2. Dispositif suivant la revendication 1, caractérisé en ce qu'il est prévu au moins trois systèmes de guidage à rouleau (434, 442, 464).

3. Dispositif suivant la revendication 1 ou la revendication 2, caractérisé en ce que le support de l'unité de guidage est une plaque d'aluminium (44).

4. Dispositif suivant l'une des revendication 1 à 3, caractérisé en ce que le coussin à aiguilles (48) et la plaque de pression (47) sont couplés mécaniquement l'un avec l'autre de telle façon qu'ensuite, lorsque le coussin à aiguilles (48) s'abaisse, la plaque de pression (47) soit entraînée avec lui, puis, quand la plaque de pression (47) remonte, le coussin à aiguilles, avec sa lame de coupe, soit entraîné avec elle et en ce que la contre-pièce des aiguilles du coussin à aiguilles (48) et la lame de coupe (481) sont intégrées de façon fixe dans la plaque d'aluminium (44).

5. Dispositif suivant l'une des revendication 2 à 4, caractérisé en ce qu'entre le premier système de guidage par rouleaux (434), disposé derrière le tambour d'entraînement (432), et le deuxième système de guidage par rouleaux (442), sont disposés deux autres systèmes de guidage par rouleaux (436, 441) comportant des rouleaux dressés perpendiculairement à la direction du transport, ce qui permet de guider la bande textile caoutchoutée (1) continue latéralement par rapport au chariot (424), dans une position tournée de 90° par rapport au reste de la position.
